(19) Europäisches Patentamt / European Patent Office / Office européen des brevets

(11) **EP 4 378 545 A1**

(12) **EUROPEAN PATENT APPLICATION**
published in accordance with Art. 153(4) EPC

(43) Date of publication:
**05.06.2024 Bulletin 2024/23**

(21) Application number: **22849598.2**

(22) Date of filing: **28.07.2022**

(51) International Patent Classification (IPC):
*A62D 1/00* (2006.01)      *A62C 2/00* (2006.01)
*B05D 5/00* (2006.01)      *B05D 7/00* (2006.01)
*B05D 7/24* (2006.01)      *B32B 27/18* (2006.01)
*C08L 29/04* (2006.01)      *C08L 29/14* (2006.01)

(52) Cooperative Patent Classification (CPC):
**A62C 2/00; A62D 1/00; B05D 5/00; B05D 7/00;
B05D 7/24; B32B 27/18; C08L 29/04; C08L 29/14**

(86) International application number:
**PCT/JP2022/029194**

(87) International publication number:
**WO 2023/008537 (02.02.2023 Gazette 2023/05)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.07.2021   JP 2021124222**
            **29.07.2021   JP 2021124420**

(71) Applicant: **TOPPAN INC.**
**Tokyo 110-0016 (JP)**

(72) Inventors:
• **HONJO Yusaku**
  **Tokyo 110-0016 (JP)**
• **KUROKAWA Masato**
  **Tokyo 110-0016 (JP)**
• **SHIINE Yasuharu**
  **Tokyo 110-0016 (JP)**
• **SHODA Ryo**
  **Tokyo 110-0016 (JP)**
• **TANABE Junya**
  **Tokyo 110-0016 (JP)**

(74) Representative: **Hoffmann Eitle
Patent- und Rechtsanwälte PartmbB
Arabellastraße 30
81925 München (DE)**

(54) **FIRE EXTINGUISHING MATERIAL-FORMING COMPOSITION, FIRE EXTINGUISHING MATERIAL, FIRE EXTINGUISHING MEMBER, AND PRODUCTION METHODS THEREFOR**

(57)    A fire extinguishing material forming composition contains: a fire extinguishing agent including at least one of a hygroscopic organic salt and an inorganic salt; and a binder including at least one of a polyvinyl acetal resin and a polyvinyl alcohol resin.

FIG.1

EP 4 378 545 A1

**Description**

[Technical Field]

The present disclosure relates to a composition for forming fire extinguishing material, a fire extinguishing material, and a fire extinguishing member and a method for producing the same. The fire extinguishing member is, for example, used for industrial members such as decorative surface materials, automotive members, aircraft members, and electronic members.

[Background Art]

Nowadays, our lives are becoming increasingly comfortable as technological advances. However, a large amount of energy is needed to produce this comfort, and in situations involving densely storing, moving, and using this energy, a high degree of safety is required. Taking automobiles as an example, the danger of combustion or fire is latent in the situations of mining fossil fuels such as gasoline, refining gasoline from fossil fuels, or transporting gasoline. Taking electronics as an example, there is also latent danger of combustion or fire when electrical energy is transmitted through electric wires, regulated in substations or transformers, used for electrical equipment in homes or plants, or temporarily stored in storage batteries.

PTL 1 discloses a fire spread prevention structure in an externally insulated structure including at least a back mortar layer, a heat insulator layer, a surface mortar layer, and a finishing material laminated in this order on the outside of the framework of a building.

A self-extinguishing product is also known (e.g., PTL 2). This product is formed by mixing a binder with a fire extinguishing composition that generates an aerosol when burned, and shaping the resultant mixture into a sheet.

[Citation List]

[Patent Literature]

[PTL 1] JP 5317785 B
[PTL 2] WO 2018/047762

[Summary of the Invention]

[Technical Problem]

Even with the externally insulated structure in Patent Literature 1, a fire may spread when flammable members are present near the structure. In the case where a fire is accompanied by an explosion, the materials are torn, and the fire will spread further. Examples of targets include switchboards, distribution boards, control panels, storage batteries (e.g., lithium-ion batteries), wallpaper for building materials, building materials such as ceiling materials, and components for lithium-ion battery collection boxes.

As in the product described in Patent Literature 2, in which the fire extinguisher composition is hygroscopic, there is room for improvement in stably maintaining the properties of the product for a long time period.

The present disclosure has been made in view of such circumstances, and an object of the disclosure is to provide a fire extinguishing material forming composition having good stability of properties which is useful for prompt initial fire extinguishing even when a fire breaks out from a target that is a structure having a complex shape such as unevenness, and also provide a fire extinguishing material and a fire extinguishing member obtained using the composition. Another object of the present disclosure is to provide a method for producing a fire extinguishing member useful for prompt initial fire extinguishing even when a fire breaks out from a target that is a structure having a complex shape such as one having unevenness.

[Solution to Problem]

An aspect of the present disclosure provides a composition for forming fire extinguishing material, including: a fire extinguishing agent including at least one of a hygroscopic organic salt and an inorganic salt; and a binder including at least one of a polyvinyl acetal resin and a polyvinyl alcohol resin. The fire extinguishing material forming composition may further comprise a liquid medium.

In a fire extinguishing material formed from such a composition, moisture absorption by the salts is suppressed by the polyvinyl acetal resin and the polyvinyl alcohol resin. The fire extinguishing material can thus have good stability of properties. In addition, the polyvinyl acetal resin and the polyvinyl alcohol resin are highly flexible thermoplastic resins. For example, even for a non-flat target surface, the fire extinguishing material can follow the target surface, and cracking is less likely to occur in the fire extinguishing material.

The fire extinguishing material forming composition may include 70 to 97% by mass of the fire extinguishing agent relative to the total amount of the fire extinguishing agent and the resin. The salt may be a potassium salt. The resin may have a weight average molecular weight Mw of 10,000 to 150,000. The resin may have a glass transition temperature Tg of 55 to 110°C.

The present disclosure also provides a fire extinguishing material formed from the composition for forming fire extinguishing material.

An aspect of the present disclosure provides a fire extinguishing member including an adherend having an uneven surface to be treated, and a fire extinguishing agent containing layer provided on the surface to be treated, the fire extinguishing agent containing layer comprising the fire extinguishing agent forming composition. A method for producing the fire extinguishing member is a method for producing a fire extinguishing member in which the fire extinguishing agent-containing layer includes a binder and a fire extinguishing agent, and includes the steps of (A) preparing the adherend having the uneven surface to be treated, and (B) forming the fire extinguishing agent containing layer on the surface to be treated. The fire extinguishing agent containing layer comprises the fire extinguishing agent forming composition, and in step (B), the fire extinguishing agent containing layer is formed by wet coating. The wet coating may be one of spray coating and dip coating.

An aspect of the present disclosure provides a method for producing a fire extinguishing member including an adherend having an uneven surface to be treated, a fire extinguishing agent containing layer provided on the surface to be treated, and a protective layer provided on a surface of the fire extinguishing agent containing layer, the fire extinguishing agent containing layer including a binder and a fire extinguishing agent, the method comprising: (A) preparing the adherend having the uneven surface to be treated; (B) forming the fire extinguishing agent containing layer on the surface to be treated; and (C) forming the protective layer on the fire extinguishing agent containing layer, wherein in step (C), the protective layer is formed by wet coating. The fire extinguishing agent containing layer may comprise the fire extinguishing agent forming composition. In step (B), the fire extinguishing agent containing layer may be formed by wet coating. The wet coating may be one of spray coating and dip coating.

[Advantageous Effects of the Invention]

The present disclosure can provide a fire extinguishing material forming composition having good stability of properties and which is useful for prompt initial fire extinguishing even when a fire breaks out from a target that is a structure having a complex shape such as one having unevenness, and also provide a fire extinguishing material formed from the fire extinguishing material forming composition. The present disclosure can also provide a method for producing a fire extinguishing member useful for prompt initial fire extinguishing even when a fire breaks out from a target that is a structure having a complex shape such as one having unevenness, and also provide a fire extinguishing member having good stability of properties and useful for prompt initial fire extinguishing when a fire breaks out and a method for producing the fire extinguishing member.

[Brief Description of the Drawings]

Fig. 1 is a schematic cross-sectional view illustrating a first embodiment of a fire extinguishing member according to the present disclosure.
Figs. 2(a) and 2(b) are schematic cross-sectional views each illustrating an example uneven shape of a surface to be treated.
Fig. 3(a) is a schematic cross-sectional view illustrating a second embodiment of a fire extinguishing member according to the present disclosure, and Fig. 3(b) illustrates a modification of the fire extinguishing member illustrated in Fig. 3(a).

[Description of the Embodiments]

Embodiments of the present disclosure will be described in detail below referring to the drawings as appropriate. However, the present invention is not limited to the embodiments described below.

<Fire Extinguishing Material Forming Composition>

A fire extinguishing material forming composition includes a fire extinguishing agent and a binder. The fire extinguishing material forming composition may further include a liquid medium.

(Fire Extinguishing Agent)

The fire extinguishing agent includes at least one of a hygroscopic organic salt and a hygroscopic inorganic salt.

The hygroscopic salt refers to a salt that increases by more than 3% in mass due to moisture absorption when the salt is exposed to an environment of about 25°C and 75% RH for 7 days.

Organic salts with hygroscopic properties that can act as extinguishing agents include potassium, sodium and ammonium salts. The organic salt may be a potassium salt. Examples of organic potassium salts include potassium carboxylate salts such as potassium acetate, monopotassium citrate, dipotassium citrate, tripotassium citrate, monopotassium tartrate, dipotassium tartrate, potassium lactate, potassium oxalate, monopotassium maleate, dipotassium maleate, monopotassium succinate, and dipotassium succinate. In particular, potassium acetate, monopotassium citrate, dipotassium citrate, or tripotassium citrate may be used in view of their usefulness for a negative catalytic effect on combustion.

Examples of hygroscopic inorganic salts serving as the fire extinguishing agent include a potassium salt and a sodium salt. The inorganic salt may be a potassium salt. Examples of inorganic potassium salts include potassium tetraborate, potassium carbonate, potassium hydrogen carbonate, potassium dihydrogen phosphate, and dipotassium hydrogen phosphate. In particular, potassium hydrogen carbonate may be used due to its usefulness for a negative catalytic effect on combustion.

The organic salt and the inorganic salt may be used alone, or two or more of the salts may be used in combination.

The organic salt and the inorganic salt may be granular. The mean particle diameter D50 of the organic salt and the inorganic salt may be 1 $\mu$m or more and 100 $\mu$m or less, and particularly 3 $\mu$m or more and 40 $\mu$m or less. A mean particle diameter D50 equal to or greater than the lower limit facilitates dispersion in the system, whereas a mean particle diameter D50 equal to or smaller than the upper limit tends to improve the stability of the resultant coating liquid, increasing the smoothness of the coated surface. The mean particle diameter D50 may be calculated by wet measurement using a laser diffraction particle size analyzer.

The amount of the fire extinguishing agent including the salt (the organic salt and the inorganic salt) may be 70% by mass or more and 97% by mass or less, and particularly 85% by mass or more and 92% by mass or less relative to the total amount of the fire extinguishing agent and a resin (a polyvinyl acetal resin and a polyvinyl alcohol resin described later). An amount of the fire extinguishing agent equal to or smaller than the upper limit makes it easy to reduce moisture absorption into the salt and form a uniform fire extinguishing material, whereas an amount of the fire extinguishing agent equal to or greater than the lower limit makes it easy to maintain sufficient fire extinguishing properties. The total amount of the fire extinguishing agent and the resin may be taken as the total amount of the salt and the binder, although it depends on their contained components.

To express the fire extinguishing function, the amount of the organic salt and the inorganic salt contained in the fire extinguishing agent may be 60% by mass or more, particularly 90% by mass or more, and more particularly 100% by mass relative to the total amount of the fire extinguishing agent.

The fire extinguishing agent may also include components other than the salts described above. Examples of those components include a colorant, an oxidant, an antioxidant, a flame retarder, an inorganic filler, a fluidizer, a desiccant, a dispersant, and a UV absorbent. These components may be selected as appropriate in accordance with the type of the salt and the type of the binder. These components may be mixed in advance with the salt described above, or the surface of the salt may be coated with the components. The percentage of the components contained in the fire extinguishing agent may be, for example, 40% by mass or less.

(Binder)

The binder includes at least one of a polyvinyl acetal resin and a polyvinyl alcohol resin. Both the polyvinyl acetal resin and the polyvinyl alcohol resin are hydroxyl-containing resins. The polyvinyl acetal resin increases in hydrophobicity as the degree of acetalization becomes greater, thus facilitating reduction in moisture absorption by the salt. The polyvinyl alcohol resin, which is not acetalized, contains more hydroxyl groups than the polyvinyl acetal resin, but, on the other hand, the polyvinyl alcohol resin seems to have many points of reaction with resin components other than the above resin. Thus, the polyvinyl alcohol resin has a higher degree of flexibility of binder design, and is usable.

The polyvinyl alcohol resin is obtained by saponification of a polyvinyl acetate resin. Examples of polyvinyl acetate resins include polyvinyl acetate, which is a homopolymer of vinyl acetate, and a copolymer of vinyl acetate and another monomer. Examples of other monomers include unsaturated carboxylic acids, unsaturated sulfonic acids, olefins, vinyl ethers, and acrylamides containing an ammonium group.

The degree of saponification of a polyvinyl alcohol resin is not limited to a particular level, but may be 80 mol % or more, and more particularly 95 mol % or more. A polyvinyl alcohol resin having an appropriate degree of saponification contributes to maintaining the shape stability of the film.

The polyvinyl alcohol resin may be modified. Examples of modifications include modification with acetoacetyl groups, modification with carboxylic acid, modification with carbonyl groups, modification with sulfonic acid, modification with hydrazide groups, modification with thiol groups, modification with alkyl groups, modification with silyl groups, modification with polyethylene glycol groups, modification with ethylene oxide groups, modification with groups having urethane bonds, and modification with phosphoric acid ester groups. The modification of the polyvinyl alcohol resin facilitates reduction in moisture absorption by the salt.

The polyvinyl acetal resin is obtained by acetalization of a polyvinyl alcohol resin.

The degree of saponification of a polyvinyl alcohol resin used to obtain the polyvinyl acetal resin is not limited to a particular level, but may be 80 mol % or more, and more particularly 95 mol % or more.

Examples of aldehydes used for the acetalization include, but are not limited to, an aldehyde that contains an aliphatic group or an aromatic group having 1 to 10 carbon atoms. Examples of aldehydes include aliphatic aldehydes such as formaldehyde, acetaldehyde, propionaldehyde, n-butyraldehyde, isobutyraldehyde, n-valeraldehyde, n-hexylaldehyde, 2-ethylbutyraldehyde, 2-ethylhexylaldehyde, n-heptylaldehyde, n-octylaldehyde, n-nonylaldehyde, n-decylaldehyde, and amyl aldehyde; and aromatic aldehydes such as benzaldehyde, cinnamaldehyde, 2-methylbenzaldehyde, 3-methylbenzaldehyde, 4-methylbenzaldehyde, p-hydroxybenzaldehyde, m-hydroxybenzaldehyde, phenylacetaldehyde, and β-phenylpropionaldehyde. These aldehydes may be used alone, or two or more of the aldehydes may be used in combination. In particular, butyraldehyde, 2-ethylhexylaldehyde, or n-nonylaldehyde are preferable because of their high acetalization reactivity, and butyraldehyde is most preferable.

Examples of ketones used for the acetalization include, but are not limited to, acetone, ethyl methyl ketone, diethyl ketone, t-butyl ketone, dipropyl ketone, allyl ethyl ketone, acetophenone, p-methylacetophenone, 4'-aminoacetophenone, p-chloroacetophenone, 4'-methoxyacetophenone, 2'-hydroxyacetophenone, 3'-nitroacetophenone, p-(1-piperidino)acetophenone, benzalacetophenone, propiophenone, benzophenone, 4-nitrobenzophenone, 2-methylbenzophenone, p-bromobenzophenone, cyclohexyl(phenyl)methanone, 2-butyronaphthone, 1-acetonaphthone, 2-hydroxy-1-acetonaphthone, and 8'-hydroxy-1'-benzonaphthone.

The amount of the aldehyde and the ketone to be used may be determined as appropriate in accordance with the degree of acetalization. For example, the total amount of the aldehyde and the ketone may be 0.30 to 0.45 hydroxyl equivalents relative to the hydroxyl groups of the polyvinyl alcohol resin before reaction.

The amount of hydroxyl in the polyvinyl acetal resin (residual hydroxyl value) may be 10 to 40 mol %, and particularly 15 to 25 mol %. When the amount of hydroxyl falls within the range, the aliphatic groups and the aromatic groups in the aldehyde and the ketone provide hydrophobicity, and the moisture absorption speed is likely to decrease. The amount of hydroxyl is the percentage (mol %) of the amount of ethylene bound to the hydroxyl relative to the total amount of ethylene in the main chain. The amount of ethylene bound to the hydroxyl may be calculated by, for example, a method according to JIS K 6728: Testing Methods for Polyvinyl Butyral.

The polyvinyl acetal resin and the polyvinyl alcohol resin may be used alone, or two or more of the resins may be used in combination.

The weight average molecular weight Mw of the polyvinyl acetal resin and the polyvinyl alcohol resin may be 10,000 or greater and preferably 20,000 or greater, and 150,000 or smaller and preferably 100,000 or smaller. The weight average molecular weight Mw equal to or greater than the lower limit is likely to provide resin hydrophobicity, whereas the weight average molecular weight Mw equal to or smaller than the upper limit is likely to provide moderate resin flexibility and improve bending resistance and coating suitability. The weight average molecular weight Mw may be calculated by a GPC method.

The glass transition temperature Tg of the polyvinyl acetal resin and the polyvinyl alcohol resin may be 55°C or more and preferably 80°C or more, and 110°C or less and preferably 100°C or less. A glass transition temperature Tg equal to or greater than the lower limit is likely to provide resin hydrophobicity because of higher crystallinity, whereas a glass transition temperature Tg equal to or smaller than the upper limit is likely to improve coating suitability. The glass transition temperature Tg may be measured by a thermal analysis with a differential scanning calorimeter.

To sufficiently express the characteristics of the polyvinyl acetal resin and the polyvinyl alcohol resin contained in the binder, the resin content may be 40% by mass or more, preferably 70% by mass or more, and more preferably 100% by mass relative to the total amount of the binder.

The binder may include components other than the above-described resins to reduce moisture absorption by the salt due to an increase in hydrophobicity. Examples of other components include a silane coupling agent. The amount of the other components contained in the binder is, for example, 60% by mass or less.

(Liquid Medium)

Examples of the liquid medium include an organic solvent. Examples of organic solvents include water-soluble solvents including: alcohols such methanol, ethanol, isopropyl alcohol, and n-propyl alcohol; ketones such as acetone and methyl ethyl ketone; glycols such as ethylene glycol and diethylene glycol; and glycol ethers such as n-methylpyrrolidone (NMP), tetrahydrofuran, and butyl cellosolve. The liquid medium may be an alcoholic solvent, and specifically a mixed solvent of ethanol and isopropyl alcohol in view of its use with the hygroscopic fire extinguishing agent.

The amount of the liquid medium may be 40 to 95% by mass relative to the total amount of the fire extinguishing material forming composition although the amount may be adjusted as appropriate in accordance with the method by which the fire extinguishing material forming composition is used. The fire extinguishing material forming composition including the liquid medium can be referred to as a fire extinguishing material forming coating liquid.

<Fire Extinguishing Material>

A fire extinguishing material may be formed from the fire extinguishing material forming composition. A method for forming the fire extinguishing material (production method) is illustrated below.

The fire extinguishing material may be formed on a target by applying the fire extinguishing material forming coating liquid to the target surface to be treated, and drying the applied coating liquid. Examples of target materials include metal, resin, wood, ceramic, and glass, and targets may be porous or nonporous.

The application may be performed by wet coating. Examples of wet coating include gravure coating, comma coating, spray coating, dip coating, curtain coating, spin coating, sponge roller coating, die coating, and coating with a brush.

For example, the viscosity of the fire extinguishing material forming coating liquid is preferably 1 to 2,000 mPa·s for gravure coating, 500 to 100,000 mPa·s for comma coating, and 0.1 to 4,000 mPa·s for spray coating. The amount of the liquid medium may be adjusted as appropriate so that the coating liquid has a viscosity within a desired range. The viscosity may be measured with a coaxial-cylinder rotational viscometer.

For a porous target, the fire extinguishing material forming coating liquid can penetrate the target. In this case, the fire extinguishing material may be formed on the target by impregnating the fire extinguishing material forming coating liquid into the target and drying the coating liquid.

The fire extinguishing material may also be obtained by shaping the fire extinguishing material forming composition. The shape of the fire extinguishing material may be determined in accordance with the use of the material, and the fire extinguishing material may be, for example, a granular fire extinguishing material, a flat fire extinguishing material, or a columnar fire extinguishing material.

[First Embodiment]

<Fire Extinguishing Member>

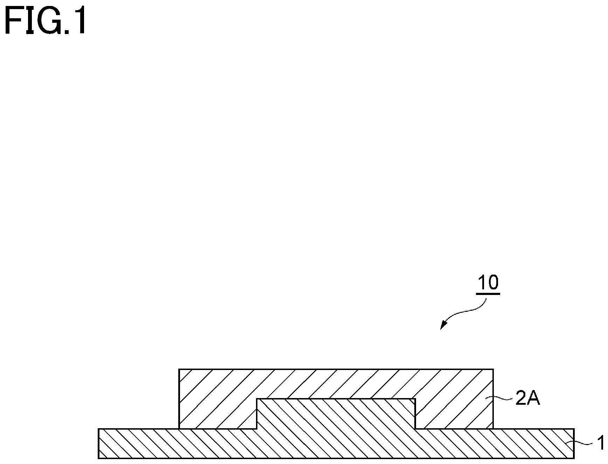

Fig. 1 is a schematic cross-sectional view of a fire extinguishing member according to a first embodiment. A fire extinguishing member 10 includes an adherend 1 having an uneven surface to be treated and a fire extinguishing agent containing layer 2A provided on the surface to be treated.

(Adherend)

The material of the adherend 1 is not limited to a particular material, and for example, an adherend used for a decorative surface material, an automotive member, an aircraft member, or an electronic member may be used. The adherend 1 may be, for example, a resin base, metal, nonflammable paper, or glass cloth.

Examples of resin bases include polyolefins (e.g., LLDPE, PP, COP, CPP), polyesters (e.g., PET), fluororesins (e.g., PTFE, ETFE, EFEP, PFA, FEP, PCTFE), PVC, PVA, acrylic resins, epoxy resins, polyamides, polyimides, and polycarbonates (PC). In particular, a resin base may include at least one of LLDPE, PP, COP, CPP, PET, PTFE, ETFE, EFEP, PFA, FEP, PCTFE, PVC, and PC because of their low water vapor transmission rates and ease of reducing the deterioration of the fire extinguishing agent. The use of a material having a high degree of transparency facilitates visual inspection of the fire extinguishing member 10 and confirmation of when to replace it.

Examples of metal include aluminum, iron, copper, and their alloys such as stainless steel or duralumin, or galvanized sheets.

In addition to the above, the adherend 1 may include, for example, an organophosphorus compound (FR), an epoxy compound, an aramid compound, an amide compound, a silicon compound, carbon, and a fiber of an aramid compound, an amide compound, a silicon compound, or carbon.

The adherend 1 has an uneven surface to be treated. The uneven surface to be treated refers to, for example, a surface to be treated having at least a certain difference in height between projections and depressions. The surface to be treated satisfies, for example, at least one of the following conditions:

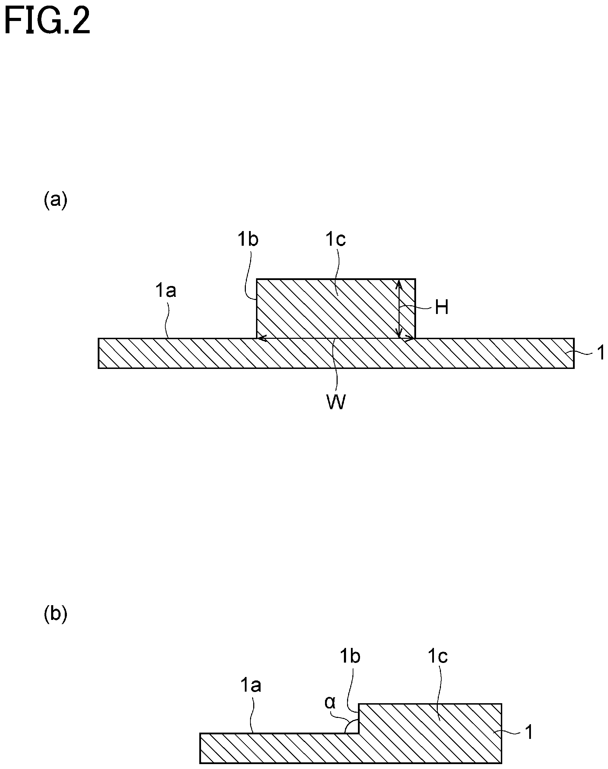

The uneven shape has a maximum height H of 0.1 mm or more (a height H in Fig. 2(a));
A bottom surface 1a and a side surface 1b of a projection 1c form an angle of 90° or less (an angle $\alpha$ in Fig. 2(b));
The bottom surface 1a and the side surface 1b have a corner R of 3 mm or less; and
The ratio of the maximum height H of the uneven shape to the minimum width W of the bottom of the projection 1c (a width W in Fig. 2(a)) (H/W) is 3 or smaller, or 1 or smaller.

In the surface to be treated, the number of projections 1c (and/or depressions) may be one or greater, and particularly three or greater. Even when a surface to be treated is uneven as described above, wet coating can cleanly provide a fire extinguishing agent containing layer 2 on the surface to be treated.

The thickness of the adherend 1 may be determined as appropriate in accordance with the amount of heat and the shock of a fire, and an acceptable space. For example, a thick adherend 1 is likely to prevent easy transmission of water vapor and provide strength and rigidity, facilitating handling. In contrast, a thin adherend 1 allows a fire extinguishing member to be provided in a narrow space. The thickness of the adherend 1 may be, for example, 0.05 to 20 mm, and preferably 0.1 to 5 mm. The adherend 1 may be a laminate of a plurality of adherends.

The adherend 1 may be an injection molded article or a press molded article. Injection molding or press molding is preferable because they allow mass production of adherends 1 having a complex uneven shape. The adherend may be a housing or provided on the inside of a housing.

(Fire Extinguishing Agent Containing Layer)

The fire extinguishing agent containing layer 2A comprises the fire extinguishing agent forming composition, and includes a binder and a fire extinguishing agent. The thickness of the fire extinguishing agent containing layer 2A may be determined as appropriate in accordance with the target for fire extinguishing by the fire extinguishing member 10, the installation site, or the amount of the fire extinguishing agent to be contained. The thickness of the fire extinguishing agent containing layer 2A may be, for example, 1 mm or less, preferably 30 to 1,000 $\mu$m, and more preferably 120 to 500 $\mu$m.

The percentage of the fire extinguishing agent contained in the fire extinguishing agent containing layer 2A (relative to the mass of the fire extinguishing agent containing layer 2A) is, for example, 70 to 97% by mass, preferably 80 to 95% by mass, and more preferably 85 to 92% by mass. A percentage of the contained fire extinguishing agent equal to or greater than 70% by mass can achieve good fire extinguishing performance, whereas a percentage equal to or smaller than 97% by mass can provide stable adhesion to the adherend 1 and achieve a stable coating film without the fire extinguishing agent being lost. The amount of the fire extinguishing agent per unit area may be determined in accordance with the target for fire extinguishing.

[Fire Extinguishing Agent]

The fire extinguishing agent may be the same as the fire extinguishing agent contained in the fire extinguishing agent forming composition. The fire extinguishing agent is not limited to a particular type and may be any appropriate agent having four fire extinguishing elements (removal, cooling, smothering, and negative catalytic actions). Specific examples of the fire extinguishing agent include common fire extinguishing agents (including a powder-like fire extinguishing agent having a potassium salt as a main component, and other common powder-like fire extinguishing agents such as sodium hydrogen carbonate and phosphate). Examples of versatile fire extinguishing agents include an ABC fire extinguishing agent, and examples of fire extinguishing agents for oil and electrical fires include a BC fire extinguishing agent. For a target that is a lithium-ion battery, a BC fire extinguishing agent or other fire extinguishing agents for lithium-ion batteries may be used. Examples of commercially available fire extinguishing agents include STAT-X (trade name, manufactured by Nippon koki Co., Ltd.).

The fire extinguishing agent may include at least one of a hygroscopic organic salt and a hygroscopic inorganic salt. Organic salts with hygroscopic properties that can act as extinguishing agents include potassium, sodium and ammonium salts. The organic salt may be a potassium salt. Examples of organic potassium salts include potassium carboxylate salts such as potassium acetate, monopotassium citrate, dipotassium citrate, tripotassium citrate, monopotassium tartrate, dipotassium tartrate, potassium lactate, potassium oxalate, monopotassium maleate, dipotassium maleate, monopotassium succinate, and dipotassium succinate. In particular, potassium acetate, monopotassium citrate, dipotassium citrate, or tripotassium citrate may be used in view of their usefulness for a negative catalytic effect on combustion.

[Binder]

The binder may be the same as the binder contained in the fire extinguishing agent forming composition. Other usable binders include thermoplastic resins and thermosetting resins. Examples of thermoplastic resins include polyolefin resins such as polypropylene resins, polyethylene resins, poly(1-butene) resins, and polypentene resins, polystyrene resins, acrylonitrile-butadiene-styrene resins, methyl methacrylate-butadiene-styrene resins, ethylenevinyl acetate resins, ethylene-propylene resins, polycarbonate resins, polyphenylene ether resins, acrylic resins, polyamide resins, and polyvinyl chloride resins. Examples of thermosetting resins include rubbers such as natural rubber (NR), isoprene rubber (IR), butadiene rubber (BR), 1,2-polybutadiene rubber (1,2-BR), styrene-butadiene rubber (SBR), chloroprene rubber (CR), nitrile rubber (NBR), butyl rubber (IIR), ethylene-propylene rubber (EPR, EPDM), chlorosulfonated polyethylene (CSM), acrylic rubber (ACM, ANM), epichlorohydrin rubber (CO, ECO), polysulfide rubber (T), silicone rubber (Q), fluororubber (FKM, FZ), and urethane rubber (U), polyurethane resins, polyisocyanate resins, polyisocyanurate resins, phenolic resins, and epoxy resins. The binder may include a hardener component.

Epoxy resins are suitable for the binder because of their good compatibility with the fire extinguishing agent, solubility in an alcohol solvent described later, and high stability. Epoxy resins do not hydrolyze or embrittle under heat and moisture conditions, and thus a fire extinguishing agent containing layer including an epoxy resin as a binder has good stability.

It is preferable to use a binder having water vapor barrier properties. The binder may achieve a water vapor transmission rate of preferably 5 g·mm/m$^2$/day or less, and more preferably 1 g·mm/m$^2$/day or less (at 40°C and 90% RH according to JIS K 7129) when a monolayer film consisting of the binder is produced. Examples of commercial products of such binders include MAXIVE (trade name, manufactured by Mitsubishi Gas Chemical Company, Inc.).

The amount of the contained binder relative to the total amount of the fire extinguishing agent containing layer 2A is, for example, 3 to 30% by mass, preferably 5 to 20% by mass, and more preferably 8 to 15% by mass. A percentage of the contained binder equal to or greater than 3% by mass can achieve good formability, whereas a percentage equal to or smaller than 30% by mass can achieve good fire extinguishing performance.

[Other Components]

The fire extinguishing agent containing layer 2A may contain other components in addition to the components described above. Examples of other components include a dispersant such as water, a solvent, a colorant, an antioxidant, a flame retarder, an inorganic filler, and an adhesive. These components may be selected as appropriate in accordance with the composition of the fire extinguishing agent containing layer and the type of the binder. The percentage of the other components contained in the fire extinguishing agent containing layer 2A (relative to the mass of the fire extinguishing agent containing layer 2A) is, for example, 10% by mass or less.

<Method for Producing Fire Extinguishing Member>

The fire extinguishing member 10 is produced through the following steps:

(A) preparing the adherend 1 having an uneven surface to be treated; and
(B) forming the fire extinguishing agent containing layer 2A on the surface to be treated.

In step (B), the fire extinguishing agent containing layer 2A is formed by wet coating.
The wet coating is a process in which, for example, a coating liquid including a binder and a fire extinguishing agent is prepared, and a film is formed on the surface to be treated of the adherend 1. The coating liquid may include, for example, an alcohol solvent. Examples of wet coating include spray coating, dip coating, curtain coating, spin coating, sponge roller coating, and coating with a brush. In particular, spray coating or dip coating is preferable. When the fire extinguishing agent containing layer 2A is not formed on an area of the surface to be treated, for example, the area may be covered with another member before the wet coating is performed.
The spray coating is a process in which a spray coater is used to spray the adherend 1 with a coating liquid. A spray method and nozzle specifications are preferably selected as appropriate in accordance with the uneven shape of the surface to be treated of the adherend 1, the solvent included in the coating liquid, the thickness of the fire extinguishing agent containing layer 2A, the tact time, and the cost of facilities. Examples of nozzle specifications include a one-fluid nozzle (capable of reliably covering the target area because the nozzle is adaptable to spray patterns (flat, straight, full-cone, hollow-cone, fine mist, elliptic, and quadrangular patterns) and spray angles (0° to 170°)) and a two-fluid spray (a spray nozzle that pulverizes and atomizes a liquid with a high-speed air flow, such as compressed air, and allows a wide range of nozzle adjustments to best fit intended uses and conditions, such as fine mist and spray). For example, to generate a front having a circular pattern with medium to large particles, a preferable spray method is a full-cone spray method, and the use of a two-fluid air atomizing spray method, which is capable of forming a fine film, is preferable because the method allows fine spray within a wide range of flow rates. In particular, when the solvent is an alcohol, the adherend 1 is preferably a material having solvent resistance and satisfying explosion-proof specifications. A desired thickness is designed in accordance with the target for fire extinguishing, and the solid content, the viscosity, and the withdrawal rate are preferably determined as appropriate relative to the thickness and the stability with respect to the fire extinguishing agent containing layer. The coating liquid may have a solid content of, for example, 15 to 60% by mass. As the solid content and the viscosity increase, a required pressure and also risk of clogging increase, although a single spray can provide a greater thickness. Furthermore, with a greater thickness provided in a single spray, bump formation may occur during drying, resulting in unevenness in the film surface. In view of the above, the solid content is preferably 20 to 50% by mass.

The dip coating is a process in which the adherend 1 is immersed vertically into a liquid (coating liquid) and withdrawn adjusting the force and speed depending on the liquid viscous force, surface tension, and weight, and the withdrawal rate of the adherend 1 is controlled relative to the relationship between the viscosity of the liquid and gravity causing the coating liquid to fall off the adherend. A desired thickness is designed in accordance with the target for fire extinguishing, and it is preferable to determine the solid content, the viscosity, and the withdrawal rate as appropriate relative to the thickness and the stability with respect to the fire extinguishing agent containing layer 2A. The liquid may have a solid content of, for example, 15 to 60% by mass. When the solid content and the viscosity are high, a greater thickness can be provided. However, thickening is more likely to occur, and also bumps are more likely to occur during drying, which may result in unevenness in the film surface. In view of the above, the solid content is preferably 20 to 50% by mass.

[Second Embodiment]

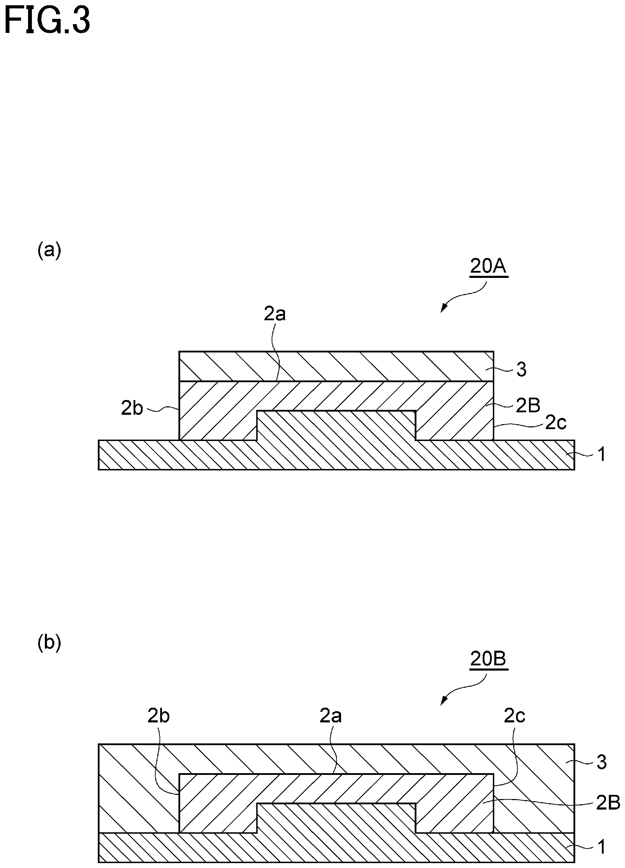

Fig. 3(a) is a schematic cross-sectional view of a fire extinguishing member according to a second embodiment. A fire extinguishing member 20A includes an adherend 1 having an uneven surface to be treated, a fire extinguishing agent containing layer 2B provided on the surface to be treated, and a protective layer 3 provided on the surface of the fire extinguishing agent containing layer 2B. The fire extinguishing member 20A is different from the fire extinguishing member 10 in further including the protective layer 3. Mainly the fire extinguishing agent containing layer 2B and the protective layer 3 will now be described.

(Fire Extinguishing Agent Containing Layer)

The fire extinguishing agent containing layer 2B includes a binder and a fire extinguishing agent. The fire extinguishing agent containing layer 2B may have the same structure as the fire extinguishing agent containing layer 2A. The thickness of the fire extinguishing agent containing layer 2B may be determined as appropriate in accordance with the target for fire extinguishing by the fire extinguishing member 20A, the installation site, or the amount of the fire extinguishing agent to be contained. The thickness of the fire extinguishing agent containing layer 2B may be, for example, 1 mm or less, particularly 30 to 1,000 $\mu$m, and more particularly 120 to 500 $\mu$m.

The percentage of the fire extinguishing agent contained in the fire extinguishing agent containing layer 2B (relative to the mass of the fire extinguishing agent containing layer 2B) is, for example, 70 to 97% by mass, preferably 80 to 95% by mass, and more preferably 85 to 92% by mass. A percentage of the contained fire extinguishing agent equal to or greater than 70% by mass can achieve good fire extinguishing performance, whereas a percentage equal to or smaller than 97% by mass can provide stable adhesion to the adherend 1 and achieve a stable coating film without the fire extinguishing agent being lost. The amount of the fire extinguishing agent per unit area may be determined in accordance with the target for fire extinguishing.

[Fire Extinguishing Agent]

The fire extinguishing agent is not limited to a particular type and may be any appropriate agent having four fire extinguishing elements (removal, cooling, smothering, and negative catalytic actions). Specific examples of the fire extinguishing agent include common fire extinguishing agents (including a powder-like fire extinguishing agent having a potassium salt as a main component, and other common powder-like fire extinguishing agents such as sodium hydrogen carbonate and phosphate). Examples of versatile fire extinguishing agents include an ABC fire extinguishing agent, and examples of fire extinguishing agents for oil and electrical fires include a BC fire extinguishing agent. For a target that is a lithium-ion battery, a BC fire extinguishing agent or other fire extinguishing agents for lithium-ion batteries may be used. Examples of commercially available fire extinguishing agents include STAT-X (trade name, manufactured by Nippon koki Co., Ltd.).

The fire extinguishing agent may include at least one of a hygroscopic organic salt and a hygroscopic inorganic salt. Organic salts with hygroscopic properties that can act as extinguishing agents include potassium, sodium and ammonium salts. The organic salt may be a potassium salt. Examples of organic potassium salts include potassium carboxylate salts such as potassium acetate, monopotassium citrate, dipotassium citrate, tripotassium citrate, monopotassium tartrate, dipotassium tartrate, potassium lactate, potassium oxalate, monopotassium maleate, dipotassium maleate, monopotassium succinate, and dipotassium succinate. In particular, potassium acetate, monopotassium citrate, dipotassium citrate, or tripotassium citrate may be used in view of their usefulness for a negative catalytic effect on combustion.

[Binder]

The binder may be the same as the binder contained in the fire extinguishing agent forming composition. Other usable binders include thermoplastic resins and thermosetting resins. Examples of thermoplastic resins include polyolefin resins such as polypropylene resins, polyethylene resins, poly(1-butene) resins, and polypentene resins, polystyrene resins, acrylonitrile-butadiene-styrene resins, methyl methacrylate-butadiene-styrene resins, ethylenevinyl acetate resins, ethylene-propylene resins, polycarbonate resins, polyphenylene ether resins, acrylic resins, polyamide resins, and polyvinyl chloride resins. Examples of thermosetting resins include rubbers such as natural rubber (NR), isoprene rubber (IR), butadiene rubber (BR), 1,2-polybutadiene rubber (1,2-BR), styrene-butadiene rubber (SBR), chloroprene rubber (CR), nitrile rubber (NBR), butyl rubber (IIR), ethylene-propylene rubber (EPR, EPDM), chlorosulfonated polyethylene (CSM), acrylic rubber (ACM, ANM), epichlorohydrin rubber (CO, ECO), polysulfide rubber (T), silicone rubber (Q), fluororubber (FKM, FZ), and urethane rubber (U), polyurethane resins, polyisocyanate resins, polyisocyanurate resins, phenolic resins, and epoxy resins. The binder may include a hardener component.

Epoxy resins are suitable for the binder because of their good compatibility with the fire extinguishing agent, solubility in an alcohol solvent described later, and high stability. Epoxy resins do not hydrolyze or embrittle under heat and moisture conditions, and thus a fire extinguishing agent containing layer including an epoxy resin as a binder has good stability.

It is preferable to use a binder having water vapor barrier properties. The binder may achieve a water vapor transmission rate of preferably 5 g·mm/m$^2$/day or less, and more preferably 1 g·mm/m$^2$/day or less (at 40°C and 90% RH according to JIS K 7129) when a monolayer film consisting of the binder is produced. Examples of commercial products of such binders include MAXIVE (trade name, manufactured by Mitsubishi Gas Chemical Company, Inc.).

The amount of the contained binder relative to the total amount of the fire extinguishing agent containing layer 2B is, for example, 3 to 30% by mass, preferably 5 to 20% by mass, and more preferably 8 to 15% by mass. A percentage of the contained binder equal to or greater than 3% by mass can achieve good formability, whereas a percentage equal to or smaller than 30% by mass can achieve good fire extinguishing performance.

[Other Components]

The fire extinguishing agent containing layer 2B may contain other components in addition to the components described above. Examples of other components include a dispersant such as water, a solvent, a colorant, an antioxidant, a flame retarder, an inorganic filler, and an adhesive. These components may be selected as appropriate in accordance with the composition of the fire extinguishing agent containing layer 2B and the type of the binder. The percentage of the other components contained in the fire extinguishing agent containing layer 2B (relative to the mass of the fire extinguishing agent containing layer 2B) may be, for example, 10% by mass or less.

(Protective Layer)

As illustrated in Fig. 3(a), the protective layer 3 is provided over a part of the surface of the fire extinguishing agent containing layer 2B. Specifically, the protective layer 3 according to the present embodiment covers a main surface 2a of the fire extinguishing agent containing layer 2B (the surface extending in the direction in which the surface to be treated of the adherend 1 extends), but not side surfaces 2b and 2c of the fire extinguishing agent containing layer 2B. The side surfaces 2b and 2c of the fire extinguishing agent containing layer 2B are exposed.

Examples of the material of the protective layer 3 include polyolefins, polyesters, fluororesins, polyvinyl chloride, polyvinyl alcohol, acrylic resins, epoxy resins, polyamides, polyimides, metals, oxides, nitrides, and oxynitrides. During transportation of the fire extinguishing member, processing of the fire extinguishing member, and long-term storage of a product including the fire extinguishing member, the protective layer 3 provided on the surface of the fire extinguishing agent containing layer 2B can reduce corrosion of the surrounding metal by alkaline water resulting from deliquescence of the fire extinguishing agent containing layer 2B. In addition, the fire extinguishing speed can be maintained.

The protective layer 3 may have a water vapor transmission rate of $2 \times 10^2$ g/m$^2$/day or less. The water vapor transmission rate equal to or smaller than $2 \times 10^2$ g/m$^2$/day can further reduce corrosion of the surrounding metal by

EP 4 378 545 A1

alkaline water resulting from deliquescence of the fire extinguishing agent containing layer 2B during transportation of the fire extinguishing member, processing of the fire extinguishing member, and long-term storage of a product including the extinguishing member. In addition, the fire extinguishing speed can be maintained. In view of the above, the water vapor transmission rate of the protective layer 3 is preferably $2 \times 10^1$ g/m²/day or less. It is noted that the water vapor transmission rate of the protective layer 3 refers to a value measured at 40°C and 90% RH in accordance with JIS K 7129.

The protective layer 3 may have a pencil hardness of B or greater. During transportation of the fire extinguishing member, processing of the fire extinguishing member, and long-term storage of a product including the extinguishing member, a pencil hardness equal to or greater than B can prevent the fire extinguishing agent containing layer 2B from being exposed due to cracking or scratching of the protective layer 3, thus preventing the fire extinguishing agent containing layer 2B from deliquescing. In view of the above, the pencil hardness of the protective layer 3 is preferably F or greater. It is noted that the pencil hardness of the protective layer 3 is a value obtained by measuring scratch hardness (pencil method) in accordance with JIS K 5600.

The thickness of the protective layer 3 is not limited to a particular value, but may be determined as appropriate in accordance with the target for fire extinguishing by the fire extinguishing member 20A, the installation site, or the amount of the fire extinguishing agent to be contained. The thickness of the protective layer 3 may be, for example, 1 to 1,000 μm, and preferably 20 to 300 μm.

Fig. 3(b) illustrates a modification of the fire extinguishing member 20Aillustrated in Fig. 3(a). The protective layer 3 illustrated in Fig. 3(b) is provided over the entire surface of the fire extinguishing agent containing layer 2B (the main surface 2a and the side surfaces 2b and 2c). A protective layer 3 covering the entire surface of the fire extinguishing agent containing layer 2B can more effectively reduce the possibility of deliquescence of the fire extinguishing agent containing layer 2B.

<Method for Producing Fire Extinguishing Member>

The fire extinguishing members 20A and 20B are produced through the following steps:

(A) preparing the adherend 1 having an uneven surface to be treated; and
(B) forming the fire extinguishing agent containing layer 2B on the surface to be treated; and
(C) forming the protective layer 3 on the fire extinguishing agent containing layer 2B.

In step (B), the fire extinguishing agent containing layer 2B may be formed by wet coating, or in step (C), the protective layer 3 may be formed by wet coating. In both steps (B) and (C), the fire extinguishing agent containing layer 2B and also the protective layer 3 may be formed by wet coating. The layers formed by wet coating allow efficient production of a fire extinguishing member having a good appearance.

The fire extinguishing agent containing layer 2B may be formed (in step (B)) in the same manner as in the first embodiment. The protective layer 3 may be formed (in step (C)) as described below. Specifically, a coating liquid including materials for the protective layer 3 is prepared, and a coating film is formed over at least a part of the fire extinguishing agent containing layer 2B. The coating liquid may include, for example, an alcohol solvent. Examples of wet coating include spray coating, dip coating, curtain coating, spin coating, sponge roller coating, and coating with a brush. In particular, spray coating or dip coating is preferable. When the fire extinguishing agent containing layer 2B is not formed on an area of the surface to be treated, for example, the area may be covered with another member before the fire extinguishing agent containing layer 2B is formed by wet coating. When the protective layer 3 is not formed on an area of the fire extinguishing agent containing layer 2B, for example, the area may be covered with another member before the protective layer 3 is formed by wet coating.

When the protective layer 3 is formed by spray coating, the thickness of the protective layer 3 is designed in accordance with the target for fire extinguishing, and the solid content, the viscosity, and the withdrawal rate are preferably determined as appropriate relative to the thickness and the stability of the protective layer 3. The coating liquid may have a solid content of, for example, 15 to 60% by mass. As the solid content and the viscosity increase, a required pressure and also risk of clogging increase, although a single spray can provide a greater thickness. Furthermore, with a greater thickness provided in a single spray, bump formation may occur during drying, resulting in unevenness in the film surface. In view of the above, the solid content is preferably 20 to 50% by mass.

When the protective layer 3 is formed by dip coating, a laminate of the adherend 1 and the fire extinguishing agent containing layer 2B may be immersed vertically into a liquid and withdrawn adjusting the force and speed due to the liquid viscous force, surface tension, and weight. The withdrawal rate is controlled relative to the relationship between the viscosity of the liquid and gravity causing the coating liquid to fall off the fire extinguishing agent containing layer 2B. The thickness of the protective layer 3 is designed in accordance with the target for fire extinguishing, and it is preferable to determine the solid content, the viscosity, and the withdrawal rate as appropriate relative to the thickness. The liquid may have a solid content of, for example, 15 to 60% by mass. When the solid content and the viscosity are high, a

11

greater thickness can be provided. However, thickening is more likely to occur, and also bumps are more likely to occur during drying, which may result in unevenness in the film surface. In view of the above, the solid content is preferably 20 to 50% by mass.

The present disclosure relates to the following.

[1] Afire extinguishing material forming composition comprising:
a fire extinguishing agent including at least one of a hygroscopic organic salt and an inorganic salt; and
a binder including at least one of a polyvinyl acetal resin and a polyvinyl alcohol resin.

[2] The fire extinguishing material forming composition according to [1], wherein the composition contains the fire extinguishing agent in an amount of 70 to 97% by mass relative to the total amount of the fire extinguishing agent and the resin.

[3] The fire extinguishing material forming composition according to [1] or [2], wherein the salt is a potassium salt.

[4] The fire extinguishing material forming composition according to any one of [1] to [3], wherein the resin has a weight average molecular weight Mw of 10,000 to 150,000.

[5] The fire extinguishing material forming composition according to any one of [1] to [4], wherein the resin has a glass transition temperature Tg of 55 to 110°C.

[6] The fire extinguishing material forming composition according to any one of [1] to [5], further comprising a liquid medium.

[7] Afire extinguishing material formed from the fire extinguishing material forming composition according to any one of [1] to [6].

[8] A method for producing a fire extinguishing member including an adherend having an uneven surface to be treated, and a fire extinguishing agent containing layer provided on the surface to be treated, the fire extinguishing agent containing layer including a binder and a fire extinguishing agent, the method comprising:

    (A) preparing the adherend having the uneven surface to be treated; and
    (B) forming the fire extinguishing agent containing layer on the surface to be treated,

    wherein

    the fire extinguishing agent containing layer comprises the fire extinguishing material forming composition according to any one of [1] to [6], and
    in step (B), the fire extinguishing agent containing layer is formed by wet coating.

[9] A method for producing a fire extinguishing member including an adherend having an uneven surface to be treated, a fire extinguishing agent containing layer provided on the surface to be treated, and a protective layer provided on a surface of the fire extinguishing agent containing layer, the fire extinguishing agent containing layer including a binder and a fire extinguishing agent, the method comprising:

    (A) preparing the adherend having the uneven surface to be treated;
    (B) forming the fire extinguishing agent containing layer on the surface to be treated; and
    (C) forming the protective layer on the fire extinguishing agent containing layer,

    wherein
    in step (C), the protective layer is formed by wet coating.

[10] The method according to [9], wherein the fire extinguishing agent containing layer comprises the fire extinguishing material forming composition according to any one of [1] to [6].

[11] The method according to [9] or [10], wherein in step (B), the fire extinguishing agent containing layer is formed by wet coating.

[12] The method according to any one of [8] to [11], wherein the wet coating is one of spray coating and dip coating.

[13] Afire extinguishing member comprising:

    an adherend having an uneven surface to be treated; and
    a fire extinguishing agent containing layer provided on the surface to be treated, wherein
    the fire extinguishing agent containing layer comprises the fire extinguishing material forming composition according to any one of [1] to [6].

[14] The fire extinguishing member according to [13], wherein the adherend is one of an injection molded article and a press molded article.

The fire extinguishing member according to [15] or [16], wherein the protective layer has a water vapor transmission rate of $2 \times 10^2$ g/m$^2$/day or less.

[16] The fire extinguishing member according to [15], wherein the protective layer comprises at least one material selected from the group consisting of polyolefins, polyesters, fluororesins, polyvinyl chloride, polyvinyl alcohol, acrylic resins, epoxy resins, polyamides, polyimides, metals, oxides, nitrides, and oxynitrides.

The fire extinguishing member according to [15] or [16], wherein the protective layer has a water vapor transmission rate of $2 \times 10^2$ g/m$^2$/day or less.

[18] The fire extinguishing member according to any one of [15] to [17], wherein the protective layer has a pencil hardness of B or greater.

Examples

The present disclosure will now be described in more detail with reference to examples, but the present invention is not limited to the examples.

[Examples 1 and 2 and Comparative Example 1]

<Preparation of Raw Materials>

The raw materials described below were prepared. The mean particle diameter D50 of each of potassium citrate and potassium hydrogen carbonate was adjusted by grinding them in an agate mortar and then filtering the resultant matter through an 800 mesh screen.

Potassium citrate: Tripotassium citrate monohydrate, manufactured by FUJIFILM Wako Pure Chemical Corporation, D50 = 3 to 18 $\mu$m
Potassium hydrogen carbonate: Potassium Hydrogen Carbonate, manufactured by KANTO CHEMICAL CO., INC., D50 = 3 to 18 $\mu$m
Polyvinyl butyral: weight average molecular weight (calculated) Mw: 20,000 to 100,000, amount of hydroxyl: 15 to 25 mol %, glass transition temperature Tg: 80 to 100°C
Urethane resin: TAKELAC TE-5899 manufactured by Mitsui Chemicals, Inc.

<Formation of Fire Extinguishing Material>

(Examples 1 and 2)

A fire extinguishing material forming coating liquid was prepared by mixing 85 parts by mass of potassium citrate or potassium hydrogen carbonate as a hygroscopic salt, 15 parts by mass of polyvinyl butyral (butyral-protected polyvinyl alcohol) as a polyvinyl acetal resin, and 130 parts by mass of ethanol as a liquid medium.

The resultant coating liquid was applied to a polyethylene terephthalate (PET) film with an applicator (gap: 750 $\mu$m) and dried in an oven for 4 minutes at 100°C. The drying provided a laminate with a 200-$\mu$m-thick fire extinguishing material formed on the PET film.

(Comparative Example 1)

The laminate was obtained using a coating liquid prepared in the same manner as the above examples except that the polyvinyl butyral was replaced with a urethane resin, and the ethanol was replaced with a mixed solvent of 87 parts by mass of ethanol, 5 parts by mass of isopropyl alcohol, and 10 parts by mass of ethyl acetate.

<Enclosure of Laminate>

A barrier film was prepared including a sealant layer (a linear low density polyethylene (L-LDPE) resin, thickness: 30 $\mu$m) and a base layer (a polyethylene terephthalate (PET) resin including a silica deposited film, thickness: 12 $\mu$m). The barrier film had a water vapor transmission rate of 0.2 to 0.6 g/m$^2$/day (at 40°C and 90% RH). Two barrier films were used to cover the laminate of the PET film and the fire extinguishing material, and the four sides of the barrier films were heat-sealed to enclose the laminate. The heat-sealing conditions were 140°C and 2 seconds. The resultant product was used as an evaluation sample.

<Evaluation of Stability of Properties>

The total light transmittance of the resultant evaluation sample was measured by a method according to JIS K 7361-1 with a haze meter (BYK-Gardner haze-guard plus, manufactured by BYK). The measurement was performed before placement of the sample in a high-temperature constant-humidity bath (at 85°C and 85% RH) (before testing) and 136 hours after placement (after testing). The total light transmittance of the barrier film was 85%. The measurement was performed three times at different measurement locations, and the variation in the total light transmittance between before and after testing at each locations was calculated in accordance with the formula described below. The average values of variations were listed in table 1. Because moisture absorption (deliquescence) by the fire extinguishing material increases transparency, the variations were checked to evaluate the stability of properties.

$$\text{Variation } \Delta = \text{Measurements after Testing - Measurements before Testing}$$

[Table 1]

|  | Fire extinguishing agent | Binder | Liquid medium | Variation $\Delta$ |
|---|---|---|---|---|
| Ex. 1 | Potassium citrate | Polyvinyl butyral | Ethanol | 30.0 |
| Ex. 2 | Potassium hydrogen carbonate | Polyvinyl butyral | Ethanol | 20.0 |
| Comp. Ex. 1 | Potassium citrate | Urethane resin | Ethanol IPA Ethyl acetate | 53.5 |

[Examples 1A to 15A and 1B to 10B, and Comparative Examples 1A to 3Aand 1B to 3B]

(Examples 1A to 15A and Comparative Examples 1A to 3A)

PC-FR (40) (AK3020 manufactured by Idemitsu Kosan, Co., Ltd, thickness: 100 $\mu$m) was prepared as an adherend. The adherend was provided with unevenness. The details of the unevenness are listed in tables 2 to 4.
A fire extinguishing material forming coating liquid for a fire extinguishing agent containing layer was prepared by adding a powdery fire extinguishing agent (trade name: ABC powder manufactured by MORITA MIYATA CORPORATION) as a hygroscopic salt and a binder (trade name: AD393 and CAT-EP5 manufactured by Toyo Ink Co., Ltd.) to isopropyl alcohol, and the mass ratio of the fire extinguishing agent and the binder was adjusted to (fire extinguishing agent/binder = 10).
Another fire extinguishing material forming coating liquid for a fire extinguishing agent containing layer was prepared by adding a mixture of potassium citrate and potassium chlorate (87.4 parts by mass) as a fire extinguishing agent and polyvinyl butyral (12.6 parts by mass) as a binder to ethanol and isopropyl alcohol, and the mass ratio of the fire extinguishing agent and the binder was adjusted to (fire extinguishing agent/binder = 6.9). The mixture of potassium citrate and potassium chlorate was ground in an agate mortar and then filtered through an 800 mesh screen to achieve a particle diameter D50 of 8 to 12 $\mu$m.
The fire extinguishing material forming coating liquid for a fire extinguishing agent containing layer was applied to the adherend prepared as above by the methods indicated in tables 2 and 3 at a drying temperature of 90°C for 1 minute so that the total solid contents became the values listed in tables 2 and 3, and the fire extinguishing agent containing layer had a total thickness of 200 $\mu$m. In this manner, the fire extinguishing members indicated in tables 2 and 3 were produced.
As indicated in table 4, in Comparative Examples 2A and 3A, a commercially available fire extinguishing sheet (having a thickness of 3 mm and including a fluoroketone fire extinguisher as the fire extinguishing agent) was used as a fire extinguishing agent containing layer. In Comparative Example 1A, no fire extinguishing agent containing layer was provided.

<Evaluation of Fire Extinguishing Member>

(Gap between Adherend and Fire Extinguishing Agent Containing Layer)

The adherend and the fire extinguishing agent containing layer were checked visually for any gaps between them. In tables 2 to 4, an example in which no gaps were observed is indicated as "Not Found," and an example in which a gap was observed is indicated as "Found."

(Fire Extinguishment Test)

<Extinguishment for Candle>

A sample was obtained by cutting the fire extinguishing member in each of the examples and comparative examples to a size of 20 mm by 20 mm. The sample was picked up with tweezers and brought to a position 20 mm above a candle flame. After the sample caught fire, the sample was observed to check whether the fire could be extinguished, and the time taken to extinguish the fire was measured.

<Extinguishment of 1 g of Solid Fuel>

A sample was obtained by cutting the fire extinguishing member in each of the examples and comparative examples to a size of 20 mm by 20 mm. After 1 g of solid fuel was placed in a pan inside an aluminum container, the solid fuel was ignited to produce a flame. The sample was picked up with tweezers and brought to a position 20 mm above the burning solid fuel. After the sample caught fire, the sample was observed to check whether the fire could be extinguished, and the time taken to extinguish the fire was measured.
[Table 2]

|  |  |  | Ex. 1A | Ex. 2A | Ex. 3A | Ex. 4A | Ex. 5A | Ex. 6A | Ex. 7A |
|---|---|---|---|---|---|---|---|---|---|
| Adherend | | Brand | PC-FR (40) | PC-FR (40) | PC-FR (40) | PC-FR (40) | PC-FR (40) | PC-FR (40) | PC-FR (40) |
| | | Thickness (mm) | 0.1 | 0.1 | 0.1 | 0.1 | 0.1 | 0.1 | 0.1 |
| | Unevenness | H (mm) | 0.1 | 5 | 5 | 5 | 5 | 5 | 5 |
| | | $\alpha$ (°) | 120 | 120 | 90 | 120 | 90 | 90 | 90 |
| | | H/W | 3 | 3 | 3 | 0.5 | 0.5 | 0.5 | 0.5 |
| | | Corner angle R (mm) | - | - | - | - | - | 2 | 2 |
| | | Number of projections/depressions | 1 | 1 | 1 | 1 | 1 | 1 | 6 |
| Fire extinguishing agent containing layer | | Binder | AD393 CAT-EP5 | AD393 CAT-EP5 | AD393 CAT-EP5 | AD393 CAT-EP5 | AD393 CAT-EP5 | AD393 CAT-EP5 | AD393 CAT-EP5 |
| | | Fire extinguishing agent | ABC powder | ABC powder | ABC powder | ABC powder | ABC powder | ABC powder | ABC powder |
| | | Fire extinguishing agent/binder | 10 | 10 | 10 | 10 | 10 | 10 | 10 |
| | | Total solid content | 20 | 20 | 20 | 20 | 20 | 20 | 20 |

| | (mass %) | | | | | | | |
|---|---|---|---|---|---|---|---|---|
| | Drying temperature (°C) | 90 | 90 | 90 | 90 | 90 | 90 | 90 |
| | Time (min) | 1 | 1 | 1 | 1 | 1 | 1 | 1 |
| | Number of film depositions | 3 | 3 | 3 | 3 | 3 | 3 | 3 |
| | Thickness (μm) | 200 | 200 | 200 | 200 | 200 | 200 | 200 |
| Method for applying fire extinguishing agent containing layer | | Spray (Air atomizing spray) Two fluids | | | | | | |
| Gap between adherend and fire extinguishing agent containing layer | | Not found | Not found | Not found | Not found | Not found | Not found | Not found |
| Extinguishment of candle | | Extinguished | Extinguished | Extinguished | Extinguished | Extinguished | Extinguished | Extinguished |
| Extinguishment of 1 g of solid fuel | | Extinguished | Extinguished | Extinguished | Extinguished | Extinguished | Extinguished | Extinguished |

[Table 3]

| | | | Ex. 8A | Ex. 9A | Ex. 10A | Ex. 11A | Ex. 12A | Ex. 13A | Ex. 14A | Ex. 15A |
|---|---|---|---|---|---|---|---|---|---|---|
| Adherend | | Brand | PC-FR (40) | PC-FR (40) | PC-FR (40) | PC-FR (40) | PC-FR (40) | PC-FR (40) | PC-FR (40) | PC-FR (40) |
| | | Thickness (mm) | 0.1 | 0.1 | 0.1 | 0.1 | 0.1 | 0.1 | 0.1 | 0.1 |
| | Unevenness | H (mm) | 0.1 | 5 | 5 | 5 | 5 | 5 | 5 | 5 |
| | | $\alpha$ (°) | 120 | 120 | 90 | 120 | 90 | 90 | 90 | 90 |
| | | H/W | 3 | 3 | 3 | 0.5 | 0.5 | 0.5 | 0.5 | 0.5 |
| | | Corner angle R (mm) | - | - | - | - | - | 2 | 2 | 2 |
| | | Number of projections/ depressions | 1 | 1 | 1 | 1 | 1 | 6 | 6 | 6 |
| Fire extinguishing agent containing layer | | Binder | AD393 CAT-EP5 | AD393 CAT-EP5 | AD393 CAT-EP5 | AD393 CAT-EP5 | AD393 CAT-EP5 | AD393 CAT-EP5 | AD393 CAT-EP5 | Polyvinyl butyral resin |
| | | Fire extinguishing agent | ABC powder | ABC powder | ABC powder | ABC powder | ABC powder | ABC powder | ABC powder | Potassium citrate, Potassium |

| | | | | | | | | | |
|---|---|---|---|---|---|---|---|---|---|
| | | | | | | | | | chlorate |
| | Fire extinguishing agent/binder | 10 | 10 | 10 | 10 | 10 | 10 | 10 | 6.9 |
| | Total solid content (mass %) | 42.5 | 42.5 | 42.5 | 42.5 | 42.5 | 42.5 | 42.5 | 30 |
| | Drying temperature (°C) | 90 | 90 | 90 | 90 | 90 | 90 | 90 | 90 |
| | Time (min) | 1 | 1 | 1 | 1 | 1 | 1 | 1 | 1 |
| | Number of film depositions | 2 | 2 | 2 | 2 | 2 | 2 | 2 | 2 |
| | Thickness (μm) | 200 | 200 | 200 | 200 | 200 | 200 | 200 | 180 |
| Method for applying fire extinguishing agent containing layer | Dip coating Adherend withdrawal rate (1 m/min) | | | | | | | | |
| Gap between adherend and fire extinguishing agent containing layer | Not found | Not found | Not found | Not found | Not found | Not found | Not found | Not found | |
| Extinguishment of candle | Extinguished | Extinguished | Extinguished | Extinguished | Extinguished | Extinguished | Extinguished | Extinguished | |
| Extinguishment of 1 g of solid fuel | Extinguished | Extinguished | Extinguished | Extinguished | Extinguished | Extinguished | Extinguished | Extinguished | |

EP 4 378 545 A1

[Table 4]

| Adherend | | | | Comp. Ex. 1A | Comp. Ex. 2A | Comp. Ex. 3A |
|---|---|---|---|---|---|---|
| | Brand | | | PC-FR (40) | PC-FR (40) | PC-FR (40) |
| | Thickness (mm) | | | 0.1 | 0.1 | 0.1 |
| | Unevenness | H (mm) | | 0.1 | 0.1 | 5 |
| | | A (°) | | 120 | 120 | 90 |
| | | H/W | | 3 | 3 | 0.5 |
| | | Corner angle R (mm) | | - | - | 2 |
| | | Number of projections/ depressions | | 1 | 1 | 6 |
| Fire extinguishing agent containing layer | | | | Not provided | Commercially available fire extinguishing sheet Thickness: 3 mm | |
| Gap between adherend and fire extinguishing agent containing layer | | | | Not found | Not found | Not found |
| Extinguishment of candle | | | | Not extinguished | Not extinguished | Not extinguished |
| Extinguishment of 1 g of solid fuel | | | | Not extinguished | Not extinguished | Not extinguished |

[Examples 1B to 10B and Comparative Examples 1B to 3B]

PC-FR (40) (AK3020 manufactured by Idemitsu Kosan, Co., Ltd., thickness: 100 μm) was prepared as an adherend. The adherend was provided with unevenness. The details of the unevenness are listed in tables 5(A), 5(B), and 6.

A fire extinguishing material forming coating liquid for a fire extinguishing agent containing layer was prepared by adding a powdery fire extinguishing agent (trade name: ABC powder manufactured by MORITA MIYATA CORPORATION) and a binder (trade name: AD393 and CAT-EP5 manufactured by Toyo Ink Co., Ltd.) to isopropyl alcohol, and the mass ratio of the fire extinguishing agent and the binder was adjusted to (fire extinguishing agent/binder = 10).

Another fire extinguishing material forming coating liquid for a fire extinguishing agent containing layer was prepared by adding a mixture of potassium citrate and potassium chlorate (87.4 parts by mass) as a fire extinguishing agent and polyvinyl butyral (12.6 parts by mass) as a binder to ethanol and isopropyl alcohol, and the mass ratio of the fire extinguishing agent and the binder was adjusted to (fire extinguishing agent/binder = 6.9). The mixture of potassium citrate and potassium chlorate was ground in an agate mortar and then filtered through an 800 mesh screen to achieve a particle diameter D50 of 8 to 12 μm.

The fire extinguishing material forming coating liquid for a fire extinguishing agent containing layer was applied to the adherend prepared above by the methods indicated in tables 5(A) and 5(B) at a drying temperature of 90°C for 1 minute so that the total solid contents became 42.5% by mass, and the fire extinguishing agent containing layer had a total thickness of 200 μm. As indicated in table 6, in Comparative Examples 2B and 3B, a commercially available fire extinguishing sheet (having a thickness of 3 mm and including a fluoroketone fire extinguisher as the fire extinguishing agent) was used as a fire extinguishing agent containing layer. In Comparative Example 1B, no fire extinguishing agent containing layer was provided.

Slurry for a protective layer was applied and dried by the method indicated in tables 5(A) and 5(B) to produce the fire extinguishing members indicated in tables 5(A) and 5(B). A coating liquid used for each protective layer is described below. In Example 8B, no fire extinguishing agent containing layer was provided.

One coating liquid for protective layers: 8.4% by mass of M-100 (manufactured by Mitsubishi Gas Chemical Company, Inc.), 26.9% by mass of C-93 (manufactured by Toyo Ink Co., Ltd.), 20.2% of methanol, and 44.5% by mass of ethyl acetate

[Evaluation of Fire Extinguishing Member]

The obtained sample was evaluated as described below. The results are listed in tables 7 and 8.

<Evaluation after Production of Sample>

The adherend and the fire extinguishing agent containing layer were checked visually for any gaps between them. In tables 7 and 8, an example in which no gaps were observed is indicated as "Not Found," and an example in which a gap was observed is indicated as "Found."

<Evaluation of Pencil Hardness of Surface Layer>

With an HA-301 manufactured by Tester Sangyo Co., Ltd., pencils having different levels of hardness were each placed at an angle of 45° to the sample surface with a load of 750 g, and immediately after the tip of the pencil was put on the coating film, the device was moved 10 mm away from the operator at a rate of 1 mm/s. The surface layer of the sample according to Example 8B was the fire extinguishing agent containing layer, and the surface layer of the sample according to each of the other examples and comparative examples (except Comparative Example 1B) was the protective layer.

<Fire Extinguishment Test>

[Extinguishment for Candle]

A sample was obtained by cutting the fire extinguishing member in each of the examples and comparative examples to a size of 20 mm by 20 mm. The sample was picked up with tweezers and brought to a position 20 mm above a candle flame. After the sample caught fire, the sample was observed to check whether the fire could be extinguished, and the time taken to extinguish the fire was measured.

[Extinguishment for 1 g of Solid Fuel]

A sample was obtained by cutting the fire extinguishing member in each of the examples and comparative examples to a size of 20 mm by 20 mm. After 1 g of solid fuel was placed in a pan inside an aluminum container, the solid fuel was ignited to produce a flame. The sample was picked up with tweezers and brought to a position 20 mm above the burning solid fuel. After the sample caught fire, the sample was observed to check whether the fire could be extinguished, and the time taken to extinguish the fire was measured.

<Evaluation of Reliability>

The sample produced as described above was placed at 85°C and 85% RH, and deliquescent properties and fire extinguishment were tested after 500 hours and after 1,000 hours. The deliquescent properties were tested in the manner described below.

[Deliquescent Properties]

A pH test paper manufactured by Asada Corporation was brought into contact with the sample surface to measure the pH. If the sample had deliquesced, the fire extinguishing agent produced an aqueous solution, expressing an alkalinity of pH 8 or greater.

[Table 5(A)]

| | | | Ex. 1B | Ex. 2B | Ex. 3B | Ex. 4B | Ex. 5B |
|---|---|---|---|---|---|---|---|
| Adherend | Brand | | Pc-fr (40) | Pc-fr (40) | Pc-fr (40) | Pc-fr (40) | Pc-fr (40) |
| | Thickness (mm) | | 0.1 | 0.1 | 0.1 | 0.1 | 0.1 |
| | Unevenness | H (mm) | 0.1 | 5 | 5 | 5 | 5 |
| | | A (°) | 120 | 120 | 90 | 120 | 90 |
| | | H/W | 3 | 3 | 3 | 0.5 | 0.5 |
| | | Corner angle R (mm) | - | - | - | - | - |
| | | Number of projections/ depressions | 1 | 1 | 1 | 1 | 1 |
| Fire extinguishing agent containing layer | Binder | | AD393 CAT-EP5 | AD393 CAT-EP5 | AD393 CAT-EP5 | AD393 CAT-EP5 | AD393 CAT-EP5 |
| | Fire extinguishing agent | | ABC powder | ABC powder | ABC powder | ABC powder | ABC powder |
| | Fire extinguishing agent/binder | | 10 | 10 | 10 | 10 | 10 |
| | Total solid content (mass %) | | 42.5 | 42.5 | 42.5 | 42.5 | 42.5 |
| | Drying temperature (°c) | | 90 | 90 | 90 | 90 | 90 |
| | Time (min) | | 1 | 1 | 1 | 1 | 1 |
| | Number of film depositions | | 2 | 2 | 2 | 2 | 2 |
| | Thickness (μm) | | 200 | 200 | 200 | 200 | 200 |
| Method for applying fire extinguishing agent containing layer | | | Spray (air atomizing spray) Two fluids | | | | |
| Protective layer | Coating liquid | | 1 | 1 | 1 | 1 | 1 |
| | Material brand | | M-100 C-93 | M-100 C-93 | M-100 C-93 | M-100 C-93 | M-100 C-93 |
| | Total solid content (mass %) | | 22.5 | 22.5 | 22.5 | 22.5 | 22.5 |
| | Drying temperature (°c) | | 90 | 90 | 90 | 90 | 90 |
| | Time (min) | | 1 | 1 | 1 | 1 | 1 |
| | Number of film depositions | | 3 | 3 | 3 | 3 | 3 |
| | Thickness (μm) | | 160 | 160 | 160 | 160 | 160 |
| Method for applying protective layer | | | Spray (air atomizing spray) Two fluids | | | | |

[Table 5(B)]

| | | | Ex. 6B | Ex. 7B | Ex. 8B | Ex. 9B | Ex. 10B |
|---|---|---|---|---|---|---|---|
| Adherend | Brand | | PC-FR (40) | PC-FR (40) | PC-FR (40) | PC-FR (40) | PC-FR (40) |
| | Thickness (mm) | | 0.1 | 0.1 | 0.1 | 0.1 | 0.1 |
| | Unevenness | H (mm) | 5 | 5 | 5 | 5 | 5 |
| | | α (°) | 90 | 90 | 90 | 90 | 90 |
| | | H/W | 0.5 | 0.5 | 0.5 | 0.5 | 0.5 |
| | | Corner angle R (mm) | 2 | 2 | 2 | 2 | 2 |
| | | Number of projections/ depressions | 1 | 6 | 6 | 6 | 6 |
| Fire extinguishing agent containing layer | Binder | | AD393 CAT-EP5 | AD393 CAT-EP5 | Polyvinyl butyral resin | AD393 CAT-EP5 | Polyvinyl butyral resin |
| | Fire extinguishing agent | | ABC powder | ABC powder | Potassium citrate, Potassium chlorate | ABC powder | Potassium citrate, Potassium chlorate |
| | Fire extinguishing agent/binder | | 10 | 10 | 6.9 | 10 | 6.9 |
| | Total solid content (mass %) | | 42.5 | 42.5 | 30 | 42.5 | 30 |
| | Drying temperature (°C) | | 90 | 90 | 90 | 90 | 90 |
| | Time (min) | | 1 | 1 | 1 | 1 | 1 |
| | Number of film depositions | | 2 | 2 | 2 | 2 | 2 |
| | Thickness (μm) | | 200 | 200 | 180 | 200 | 180 |
| Method for applying fire extinguishing agent containing layer | | | Spray (Air atomizing spray) Two fluids | | | | |
| Protective layer | Coating liquid | | 1 | 1 | 1 | - | - |
| | Material brand | | M-100 C-93 | M-100 C-93 | M-100 C-93 | - | - |
| | Total solid content (mass %) | | 22.5 | 22.5 | 22.5 | - | - |
| | Drying temperature (°C) | | 90 | 90 | 90 | - | - |

(continued)

| agent containing layer | Fire extinguishing agent | ABC powder | ABC powder | Potassium citrate, Potassium chlorate | ABC powder | Potassium citrate, Potassium chlorate |
|---|---|---|---|---|---|---|
| | Time (min) | 1 | 1 | 1 | - | - |
| | Number of film depositions | 3 | 3 | 3 | - | - |
| | Thickness (μm) | 160 | 160 | 160 | - | - |
| Method for applying protective layer | | Spray (Air atomizing spray) Two fluids | | | - | - |

[Table 6]

| | | | Comp. Ex. 1B | Comp. Ex. 2B | Comp. Ex. 3B |
|---|---|---|---|---|---|
| Adherend | Brand | | PC-FR (40) | PC-FR (40) | PC-FR (40) |
| | Thickness (mm) | | 0.1 | 0.1 | 0.1 |
| | Unevenness | H (mm) | 0.1 | 0.1 | 5 |
| | | α (°) | 120 | 120 | 90 |
| | | H/W | 3 | 3 | 0.5 |
| | | Corner angle R (mm) | - | - | 2 |
| | | Number of projections/ depressions | 1 | 1 | 6 |
| Fire extinguishing agent containing layer | | | Not provided | Commercially available fire extinguishing sheet thickness: 3 mm | |
| Protective layer | | | Not provided | Not provided | Not provided |

[Table 7]

| Evaluation after production of sample | | | |
|---|---|---|---|
| Extinguishment of candle | Pencil hardness of surface layer | Gap between adherend and fire extinguishing agent containing layer | |
| Extinguished | H | Not found | Ex. 1B |
| Extinguished | H | Not found | Ex. 2B |
| Extinguished | H | Not found | Ex. 3B |
| Extinguished | H | Not found | Ex. 4B |
| Extinguished | H | Not found | Ex. 5B |
| Extinguished | H | Not found | Ex. 6B |
| Extinguished | H | Not found | Ex. 7B |
| Extinguished | H | Not found | Ex. 8B |
| Extinguished | 2B | Not found | Ex. 9B |
| Extinguished | 2B | Not found | Ex. 10B |

| Evaluation after 500 hours at 85°C, 85% RH | | | |
|---|---|---|---|
| Extinguishment of candle | Deliquescent properties (pH test paper) | Fire extinguishing time (sec) | Extinguishment of 1g of solid fuel |
| Extinguished | Not deliquescent (pH 7) | 3±2 | Extinguished |
| Extinguished | Not deliquescent (pH 7) | 3±2 | Extinguished |
| Extinguished | Not deliquescent (pH 7) | 3±2 | Extinguished |
| Extinguished | Not deliquescent (pH 7) | 3±2 | Extinguished |
| Extinguished | Not deliquescent (pH 7) | 3±2 | Extinguished |
| Extinguished | Not deliquescent (pH 7) | 3±2 | Extinguished |
| Extinguished | Not deliquescent (pH 7) | 3±2 | Extinguished |
| Extinguished | Not deliquescent (pH 7) | 3±2 | Extinguished |
| Extinguished | Deliquescent (pH 8) | 4±3 | Extinguished |
| Extinguished | Deliquescent (pH 8) | 4±3 | Extinguished |

| | Evaluation after 1,000 hours at 85°C, 85% RH | | |
| --- | --- | --- | --- |
| Extinguishment of candle | Deliquescent properties (pH test paper) | Fire extinguishing time | Extinguishment of 1g of solid fuel |
| Extinguished | Not deliquescent (pH 7) | 5±3 | Extinguished |
| Extinguished | Not deliquescent (pH 7) | 5±3 | Extinguished |
| Extinguished | Not deliquescent (pH 7) | 5±3 | Extinguished |
| Extinguished | Not deliquescent (pH 7) | 5±3 | Extinguished |
| Extinguished | Not deliquescent (pH 7) | 5±3 | Extinguished |
| Extinguished | Not deliquescent (pH 7) | 5±3 | Extinguished |
| Extinguished | Not deliquescent (pH 7) | 5±3 | Extinguished |
| Extinguished | Not deliquescent (pH 7) | 5±3 | Extinguished |
| Extinguished | Deliquescent (pH 8) | 20±16 | Extinguished |
| Extinguished | Deliquescent (pH 8) | 20±16 | Extinguished |

| Fire extinguishing time | Extinguishment of 1g of solid fuel |
| --- | --- |
| 7±3 | Extinguished |
| 7±3 | Extinguished |
| 7±3 | Extinguished |
| 7±3 | Extinguished |
| 7±3 | Extinguished |
| 7±3 | Extinguished |
| 7±3 | Extinguished |
| 7±3 | Extinguished |
| 60±56 | Extinguished |
| 60±56 | Extinguished |

[Table 8]

| | | Comp. Ex. 1B | Comp. Ex. 2B | Comp. Ex. 3B |
|---|---|---|---|---|
| Evaluation after production of sample | Gap between adherend and fire extinguishing agent containing layer | - | Found (Impossible for entire surface to be attached) | Found (Impossible for entire surface to be attached) |
| | Pencil hardness of surface layer | - | F | F |
| | Extinguishment for candle | Not extinguished | Not extinguished | Not Extinguished |
| | Extinguishment for 1g of solid fuel | Not extinguished | Not extinguished | Not Extinguished |
| | Fire extinguishing time (sec) | - | - | - |
| Evaluation after 500 hours at 85°C, 85% RH | Deliquescent properties (pH test paper) | - | - | - |
| | Extinguishment for candle | Not extinguished | Not extinguished | Not Extinguished |
| | Extinguishment for 1g of solid fuel | Not extinguished | Not extinguished | Not Extinguished |
| | Fire extinguishing time | - | - | - |
| Evaluation after 1,000 hours at 85°C, 85% RH | Deliquescent properties (pH test paper) | - | - | - |
| | Extinguishment for candle | Not extinguished | Not extinguished | Not Extinguished |
| | Extinguishment for 1g of solid fuel | Not extinguished | Not extinguished | Not Extinguished |
| | Fire extinguishing time | - | - | - |

[Reference Signs List]

1 ... Adherend

2A, 2B ... Fire extinguishing agent containing layer

3 ... Protective layer

10, 20A, 20B ... Fire extinguishing member

**Claims**

1. A fire extinguishing material forming composition comprising:

a fire extinguishing agent including at least one of a hygroscopic organic salt and an inorganic salt; and

a binder including at least one of a polyvinyl acetal resin and a polyvinyl alcohol resin.

2. The fire extinguishing material forming composition according to claim 1, wherein
   the composition contains the fire extinguishing agent in an amount of 70 to 97% by mass relative to a total amount of the fire extinguishing agent and the resin.

3. The fire extinguishing material forming composition according to claim 1, wherein
   the salt is a potassium salt.

4. The fire extinguishing material forming composition according to claim 1, wherein
   the resin has a weight average molecular weight Mw of 10,000 to 150,000.

5. The fire extinguishing material forming composition according to claim 1, wherein
   the resin has a glass transition temperature Tg of 55 to 110°C.

6. The fire extinguishing material forming composition according to claim 1, further comprising:
   a liquid medium.

7. A fire extinguishing material formed from the fire extinguishing material forming composition according to any one of claims 1 to 6.

8. A method for producing a fire extinguishing member including an adherend having an uneven surface to be treated, and a fire extinguishing agent containing layer provided on the surface to be treated, the fire extinguishing agent containing layer including a binder and a fire extinguishing agent, the method comprising steps of:

   (A) preparing the adherend having the uneven surface to be treated; and
   (B) forming the fire extinguishing agent containing layer on the surface to be treated,
   wherein the fire extinguishing agent containing layer comprises the fire extinguishing material forming composition according to any one of claims 1 to 6, and
   in step (B), the fire extinguishing agent containing layer is formed by wet coating.

9. A method for producing a fire extinguishing member including an adherend having an uneven surface to be treated, a fire extinguishing agent containing layer provided on the surface to be treated, and a protective layer provided on a surface of the fire extinguishing agent containing layer, the fire extinguishing agent containing layer including a binder and a fire extinguishing agent, the method comprising:

   (A) preparing the adherend having the uneven surface to be treated;
   (B) forming the fire extinguishing agent containing layer on the surface to be treated; and
   (C) forming the protective layer on the fire extinguishing agent containing layer,

   wherein in step (C), the protective layer is formed by wet coating.

10. The method according to claim 9, wherein
    the fire extinguishing agent containing layer comprises the fire extinguishing material forming composition according to any one of claims 1 to 6.

11. The method according to claim 9, wherein
    in step (B), the fire extinguishing agent containing layer is formed by wet coating.

12. The method according to claim 11, wherein
    the wet coating is one of spray coating and dip coating.

13. A fire extinguishing member comprising:

    an adherend having an uneven surface to be treated; and
    a fire extinguishing agent containing layer provided on the surface to be treated,
    wherein the fire extinguishing agent containing layer comprises the fire extinguishing material forming composition according to any one of claims 1 to 6.

**14.** The fire extinguishing member according to claim 13, wherein
the adherend is one of an injection molded article and a press molded article.

**15.** The fire extinguishing member according to claim 13, further comprising:
a protective layer provided on a surface of the fire extinguishing agent containing layer.

**16.** The fire extinguishing member according to claim 15, wherein
the protective layer comprises at least one material selected from the group consisting of polyolefins, polyesters, fluororesins, polyvinyl chloride, polyvinyl alcohol, acrylic resins, epoxy resins, polyamides, polyimides, metals, oxides, nitrides, and oxynitrides.

**17.** The fire extinguishing member according to claim 15, wherein
the protective layer has a water vapor transmission rate of $2 \times 10^2$ g/m$^2$/day or less.

**18.** The fire extinguishing member according to claim 15, wherein
the protective layer has a pencil hardness of B or greater.

FIG.1

# FIG.2

(a)

(b)

# FIG.3

(a)

(b)

| INTERNATIONAL SEARCH REPORT | International application No. |
|---|---|
| | **PCT/JP2022/029194** |

**A. CLASSIFICATION OF SUBJECT MATTER**

*A62D 1/00*(2006.01)i; *A62C 2/00*(2006.01)i; *B05D 5/00*(2006.01)i; *B05D 7/00*(2006.01)i; *B05D 7/24*(2006.01)i;
*B32B 27/18*(2006.01)i; *C08L 29/04*(2006.01)i; *C08L 29/14*(2006.01)i
FI: A62D1/00; A62C2/00 X; B05D5/00 E; B05D7/00 K; B05D7/24 303A; B32B27/18 B; C08L29/04 A; C08L29/14

According to International Patent Classification (IPC) or to both national classification and IPC

**B. FIELDS SEARCHED**

Minimum documentation searched (classification system followed by classification symbols)

A62D1/00; A62C2/00; B05D5/00; B05D7/00; B05D7/24; B32B27/18; C08L29/04; C08L29/14

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 07-503159 A (LYUBERETSKOE LYUBERETSKOE NAUCHNO-PROIZVVODSTVENNOE OBEDINENIE SOYUZ) 06 April 1995 (1995-04-06) claims, p. 3, lower left column, line 7 to p. 4, lower left column, line 6, example 3 | 1–7 |
| Y | | 8-18 |
| X | CN 108992831 A (CHANGZHOU YANGPENG TECHNOLOGY CO., LTD.) 14 December 2018 (2018-12-14) claims, paragraphs [0004]-[0014], examples 2, 3 | 1-7 |
| Y | | 8-18 |
| X | CN 111803822 A (LUZHOU NORTH CHEMICAL INDUSTRY CO., LTD.) 23 October 2020 (2020-10-23) claims, examples 1-3 | 1-7 |
| X | JP 2007-535977 A (GOODRICH CORP.) 13 December 2007 (2007-12-13) claims, paragraph [0047], example 1 | 1-7 |

☑ Further documents are listed in the continuation of Box C.   ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **05 September 2022** | **20 September 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

| International application No. |
| --- |
| **PCT/JP2022/029194** |

### C. DOCUMENTS CONSIDERED TO BE RELEVANT

| Category* | Citation of document, with indication, where appropriate, of the relevant passages | Relevant to claim No. |
| --- | --- | --- |
| Y | JP 05-084873 A (TOPPAN PRINTING CO., LTD.) 06 April 1993 (1993-04-06)<br>claims, paragraphs [0001], [0009], [0010], fig. 1 | 8-18 |
| Y | JP 2013-541131 A (LI-TEC BATTERY GMBH) 07 November 2013 (2013-11-07)<br>claims, paragraph [0001], fig. 3-7 | 8-18 |
| Y | CN 111388914 A (SHANDONG LUANG ELECTRIC CO., LTD.) 10 July 2020 (2020-07-10)<br>claims, paragraphs [0007], [0011], fig. 1, 2 | 9-12, 15-18 |
| Y | CN 212160892 U (ZHEJIANG JUSEN DETECTION TECHNOLOGY CO., LTD.) 15 December 2020 (2020-12-15)<br>claims, paragraphs [0016]-[0019], fig. 5 | 9-12, 15-18 |
| Y | JP 04-077297 A (CANON KABUSHIKI KAISHA) 11 March 1992 (1992-03-11)<br>claims, p. 2, upper left column, line 18 to upper right column, line 8, examples | 9-12, 15-18 |
| P, X | JP 2021-190360 A (BLUE SKY TECHNOLOGY CO., LTD.) 13 December 2021 (2021-12-13)<br>claims, paragraphs [0032]-[0103], fig. 5, 6 | 1-18 |
| P, X | JP 2021-118847 A (YAMATO PROTEC CO.) 12 August 2021 (2021-08-12)<br>claims, paragraphs [0012]-[0039] | 1-8, 13-14 |

Form PCT/ISA/210 (second sheet) (January 2015)

## INTERNATIONAL SEARCH REPORT
### Information on patent family members

International application No.

**PCT/JP2022/029194**

| Patent document cited in search report | | | Publication date (day/month/year) | Patent family member(s) | | | Publication date (day/month/year) |
|---|---|---|---|---|---|---|---|
| JP | 07-503159 | A | 06 April 1995 | CA | 2129029 | A1 | |
| | | | | claims, p. 4, line 14 to p. 8, line 24, example 3 | | | |
| | | | | WO | 1993/014820 | A1 | |
| | | | | EP | 627244 | A1 | |
| | | | | RU | 2005517 | C1 | |
| | | | | AU | 3651693 | A | |
| | | | | CN | 1078161 | A | |
| CN | 108992831 | A | 14 December 2018 | (Family: none) | | | |
| CN | 111803822 | A | 23 October 2020 | (Family: none) | | | |
| JP | 2007-535977 | A | 13 December 2007 | US | 2005/0242319 | A1 | |
| | | | | claims, paragraph [0052], example 1 | | | |
| | | | | WO | 2006/052275 | A2 | |
| | | | | EP | 1773459 | A2 | |
| | | | | AU | 2005305380 | A1 | |
| | | | | AT | 513595 | T | |
| JP | 05-084873 | A | 06 April 1993 | (Family: none) | | | |
| JP | 2013-541131 | A | 07 November 2013 | US | 2013/0209852 | A1 | |
| | | | | claims, paragraph [0001], fig. 3-7 | | | |
| | | | | WO | 2012/022479 | A2 | |
| | | | | EP | 2606521 | A2 | |
| | | | | DE | 102010034825 | A1 | |
| | | | | CN | 103069608 | A | |
| | | | | KR | 10-2014-0004065 | A | |
| CN | 111388914 | A | 10 July 2020 | (Family: none) | | | |
| CN | 212160892 | U | 15 December 2020 | (Family: none) | | | |
| JP | 04-077297 | A | 11 March 1992 | (Family: none) | | | |
| JP | 2021-190360 | A | 13 December 2021 | (Family: none) | | | |
| JP | 2021-118847 | A | 12 August 2021 | WO | 2021/149758 | A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5317785 B

- WO 2018047762 A